# FASCICULE DE BREVET EUROPEEN

(11) **EP 0 657 490 B1**
(45) Date de publication et mention de la délivrance du brevet: **29.08.2001**
(21) Numéro de dépôt: 94402798.6
(22) Date de dépôt: 06.12.1994
(51) Int. Cl.: C08J 5/08

(54) **Procédé de fabrication d'un matériau composite et matériau en résultant**
Verfahren zur Herstellung eines Verbundwerkstoffes und damit erhaltener Werkstoff
Process of manufacturing a composite material and material thus obtained

(30) Priorité: 09.12.1993 FR 9314794
(43) Date de publication de la demande: 14.06.1995
(73) Titulaire: Saint-Gobain Vetrotex France, 73000 Chambéry (FR)
(72) Inventeur: Moireau, Patrick, F-73190 Curienne (FR); Johnson, Timothy, F-73160 Vimines (FR)
(74) Mandataire: Breton, Jean-Claude

(56) Documents cités:
- EP-A- 0 436 198
- GB-A- 1 087 904
- DATABASE WPI Derwent Publications Ltd., London, GB; AN 83-13263K[06] & JP-A-57 209 938 (DAINIPPON INK. CHEM. KK.) 23 Décembre 1982

## Description

La présente invention concerne un procédé de fabrication d'un matériau composite formé d'une matière organique renforcée par des fils de verre.

La fabrication d'un matériau composite de ce genre a fait l'objet de très nombreuses publications, notamment de demandes de brevet ou de brevets.

D'une manière générale, les fils de verre sont revêtus, lors de leur fabrication, d'un ensimage dont la composition est fonction de la nature de la matière organique qu'ils seront amenés à renforcer.

L'ensimage déposé sur les filaments de verre avant que ces derniers soient rassemblés en au moins un fil, doit posséder certaines propriétés et conférer audit fil différentes qualités. L'ensimage doit en particulier être stable et conserver une composition constante, malgré les forces de cisaillement provoquées en permanence au sein dudit ensimage par les filaments qui le traversent à des vitesses de l'ordre de plusieurs dizaines de mètres par seconde.

L'ensimage doit ensuite protéger les filaments de l'abrasion provoquée par le frottement inévitable du fil sur différentes surfaces. Il doit aussi assurer l'intégrité du fil, c'est-à-dire, la liaison des filaments qui le constituent entre eux. Cette caractéristique est importante car elle permet non seulement d'extraire facilement un fil d'un enroulement (présentation très courante des fils de verre) mais elle limite aussi le nombre de filaments qui frottent directement sur tous les dispositifs de guidage du fil. Lorsque le fil est destiné à renforcer une matière organique, l'ensimage doit également faciliter le mouillage des filaments qui le constituent par ladite matière.

L'obtention d'une bonne intégrité et celle d'une bonne aptitude au mouillage par la matière organique sont peu compatibles : en effet, plus l'intégrité du fil est grande, plus la liaison entre les filaments est forte et plus la matière organique pénètre difficilement au sein du fil. Cette difficulté d'imprégnation d'un fil par la matière organique est encore plus marquée lorsqu'il a subi une torsion et est utilisé comme renfort sous la forme d'un tissu.

Enfin, lorsque le fil de verre est destiné à renforcer des matières organiques, l'ensimage déposé sur les filaments doit être compatible chimiquement avec lesdites matières.

La quasi totalité des ensimages connus sont des ensimages en phase aqueuse qui se présentent sous la forme de solutions ou, beaucoup plus souvent, sous la forme de suspensions ou d'émulsions dans l'eau.

Préalablement à leur association avec une matière organique, les fils de verre ainsi ensimés doivent être séchés pour éliminer l'eau qui devient inutile voire gênante. Pour ce faire, les enroulements sont soumis à des cycles de températures généralement comprises entre 110 à 150°C pendant des durées qui peuvent atteindre et dépasser 16 heures. En effet, la quantité d'eau à évaporer est importante car elle représente, en moyenne, au moins 10 à 15 % en poids de l'enroulement. Cette opération nécessite des installations particulières et une consommation d'énergie dont le coût grève les frais de production.

Par ailleurs, le séchage des enroulements peut parfois nuire à la qualité du fil lorsqu'il provoque une migration irrégulière des composants de l'ensimage à travers les spires desdits enroulements.

Afin de pallier ces inconvénients, il est connu de sécher directement le fil (US-A-3 853 605) ou les filaments (WO-92/05122) avant la formation de l'enroulement.

Le séchage des fils pendant l'opération de fibrage nécessite l'implantation de dispositifs tels que des fours au-dessous de chaque filière. Par ailleurs, l'efficacité de ce mode de séchage est étroitement lié aux conditions de fabrication telles que la quantité d'eau sur le fil, la composition de l'ensimage, la vitesse d'étirage, le nombre et le diamètre des filaments.

Pour les rares cas d'ensimages composés uniquement de constituants organiques, les fils de verre revêtus de tels ensimages sont souvent soumis à un traitement particulier avant leur bobinage sur un support en rotation. Le but de ce traitement est de provoquer sur le fil, avant son bobinage, une modification de l'ensimage telle que ce dernier ne soit pas à l'origine d'un collage trop important des spires de l'enroulement entre elles, collage susceptible de rendre le dévidage du fil difficile sinon impossible. Ce traitement consiste, par exemple, à chauffer la nappe de filaments revêtus d'ensimage de manière à éliminer le solvant dudit ensimage avant la formation du fil par rassemblement desdits filaments (US-A-3 425 862), ou à polymériser l'ensimage en soumettant le fil, sur au moins une partie de son trajet, à l'action de radiations ultraviolettes (US-A-5 049 407). Là encore, ce genre de traitement nécessite l'implantation de dispositifs au-dessous de chaque filière et n'évite pas la recherche du meilleur compromis possible entre l'intégrité du fil et son aptitude à être mouillé par une matière organique.

Un fil intègre, revêtu d'un ensimage purement organique, peut être obtenu sans pour cela avoir été soumis à un traitement thermique ou autre ; c'est l'ensimage par lui-même qui assure la liaison des filaments entre eux. Le brevet US-A-4 530 860 décrit de tels ensimages, qui comprennent un pourcentage important d'agents filmogènes dont le rôle essentiel est de conférer l'intégrité nécessaire à la manipulation du fil.

Les caractéristiques mécaniques d'un matériau composite formé d'une matière organique renforcée par des fils de verre dépendent de la qualité de l'adhérence desdits fils à ladite matière. Cette adhérence resulte de l'aptitude au mouillage des fils par la matière, qui est fonction notamment de la nature de l'ensimage, de sa répartition sur le fil, de l'état sous lequel se trouve l'ensimage pour provoquer la cohésion des filaments formant le fil. Or, ces différentes variables sont étroitement liées aux conditions de fabrication du fil mentionnées précédemment, qui contrarient l'obtention d'un fil dont l'imprégnation par une matière organique soit la meilleure possible.

La présente invention a pour objet un procédé de fabrication d'un matériau composite formé d'une matière organique renforcée par des fils de verre dont la surface a été directement traitée lors de leur fabrication, afin de leur conférer des caractéristiques favorisant leur imprégnation par ladite matière.

La présente invention a aussi pour objet un procédé de fabrication d'un matériau composite qui permet d'améliorer une ou plusieurs de ces propriétés mécaniques.

Ces buts sont atteints par un procédé qui consiste à utiliser des fils des verre revêtus d'un ensimage constitué d'une solution dont la teneur en solvant est inférieure à 5% en poids, ladite solution comprenant un mélange de composants polymérisables et/ou réticulables par traitement thermique, lesdits composants étant pour au moins 60% en poids d'entre eux des composants dont la masse moléculaire est inférieure à 750, moins de 10% en poids d'agents filmogènes et de 0 à 25% en poids d'agents de pontage, d'agents lubrifiants, d'agents stabilisants, d'amorceurs et/ou de catalyseurs de polymérisation par traitement thermique, lesdits agents et amorceurs étant éventuellement polymérisables et/ou réticulables par traitement thermique, à associer lesdits fils de verre revêtus dudit ensimage non polymérisé et une matière organique, puis à soumettre l'ensemble à un traitement thermique et/ou à l'action d'un rayonnement actinique.

La demande EP-A-0657395, revendiquant la même date de priorité et publiée le même jour, a pour objet un procédé du même type d'après lequel la solution comprend notamment des composants qui possèdent au moins une fonction acrylique et/ou méthacrylique et/ou vinyléther et/ou N-vinylamide et/ou N-vinyllactame.

Par ensimage, il faut entendre le mélange (ici la solution) déposé à la surface des filaments de verre continus au moment de leur obtention par étirage mécanique de filets de verre fondu issus d'une filière. Ces filaments sont rassemblés en au moins un fil au cours de cette opération.

Alors que dans l'art antérieur il est souvent nécessaire d'éliminer l'ensimage déposé sur le fil, avant de procéder à un second traitement pour le rendre apte à une application particulière, *ainsi que l'illustre l'exemple 4 de la demande GB-A-1 087 904*, l'un des avantages de la présente invention est d'utiliser un fil qui n'a pas subi d'autre traitement que le dépôt d'une solution à sa surface lors de sa fabrication.

Dans la solution ainsi déposée, le mélange de composants polymérisables et/ou réticulables est formé, de préférence, pour au moins 60% en poids d'entre eux, de composants dont la masse moléculaire est inférieure à 500.

Les composants formant au moins 60 % en poids du mélange sont, de préférence, des monomères.

L'emploi d'un mélange de monomères, généralement assez réactifs, favorise le phénomène de polymérisation. Par ailleurs, l'emploi d'un mélange de monomères facilite la diffusion d'une partie de l'ensimage dans la matrice à renforcer et favorise le développement de la réticulation, ce qui confère une bonne stabilité au polymère obtenu.

L'ensimage déposé sur les filaments doit présenter une teneur minimale en composants polymérisables et/ou réticulables; cette teneur est de préférence au moins égale à 70 % en poids. l'ensimage déposé sur les filaments dans le cadre du procédé selon l'invention comprend, généralement de 75 à 100 % en poids de composants polymérisables et/ou réticulables.

Dans la plupart des cas l'ensimage déposé sur les filaments est dénué de solvant. Il peut parfois en comprendre une faible quantité ; il s'agit alors de solvants organiques, parfois nécessaires à la mise en solution de certains composants polymérisables et/ou réticulables, ou de l'eau introduite la plupart du temps par le biais de constituants hydratés ou hydrolysés. La présence de ces solvants en quantité limitée ne requiert pas de traitements particuliers pour les éliminer.

L'ensimage déposé sur les filaments se caractérise également par la présence éventuelle, en faible quantité, d'agents filmogènes. La teneur de ces derniers, inférieure à 10 % en poids, est insuffisante pour leur faire jouer le rôle traditionnel d'agents de collage et conférer au fil une quelconque intégrité. Cette teneur est le plus souvent inférieure à 5 % en poids. Par contre, en faible quantité, ils peuvent faciliter le fibrage pour certaines vitesses d'étirage et pour certains diamètres des filaments étirés. Ainsi, lorsque les filaments sont très fins et les vitesses d'étirage élevées, la présence d'agents filmogènes atténue le frottement des filaments sur le dispositif assurant le dépôt de l'ensimage. Les agents filmogènes utilisés dans le cadre de l'invention sont, de préférence, des dérivés des silicones et/ou des siloxanes.

L'ensimage déposé sur les filaments peut également comprendre des agents de pontage tels que des organo-silanes ; dans ce cas la teneur en silane dans l'ensimage peut atteindre 15 % en poids dudit ensimage. Ces agents de pontage ne sont pas indispensables dans le cadre de l'invention.

L'ensimage déposé sur les filaments peut aussi comprendre des agents lubrifiants ; ces agents sont introduits dans l'ensimage, notamment lorsque le fil ainsi ensimé est destiné à certaines applications textiles. Ces agents sont, de préférence, des esters gras ou des esters de glycol. Leur teneur pondérale n'excède pas 8 % ; au-delà de 8 % environ, lorsque le fil ensimé est en contact avec une matière organique, ces agents lubrifiants peuvent migrer dans ladite matière et risquent éventuellement de jouer alors un rôle de catalyseur d'oxydation ou d'hydrolyse. Ce phénomène se traduit par un vieillissement accéléré du matériau composite réalisé ou être à l'origine d'un défaut d'adhérence.

Selon la destination du fil obtenu selon l'invention, l'ensimage pourra éventuellement comprendre des amorceurs et/ou des catalyseurs de polymérisation par traitement thermique dans des proportions relativement importantes. Une forte teneur en amorceurs et/ou catalyseurs de polymérisation peut nuire à la stabilité de l'ensimage ; c'est la raison pour laquelle, en l'absence d'agents stabilisants qui jouent le rôle de retardateurs de polymérisation, cette teneur n'excède généralement pas 4 % en poids.

Comme indiqué précédemment, l'ensimage peut comprendre des agents stabilisants qui jouent le rôle de retardateurs de polymérisation. Ces agents sont introduits dans l'ensimage notamment lorsqu'il est nécessaire d'éviter que certains constituants réagissent spontanément entre eux pendant l'opération de fibrage. En général, leur teneur dans l'ensimage déposé sur les filaments n'excède pas 3 % en poids.

L'ensimage déposé sur les filaments se répartit très rapidement sur toute leur surface et forme un véritable film de protection pour chacun d'entre eux. Au stade de l'enroulement qui vient d'être fabriqué, le fil qui le forme est constitué de filaments qui peuvent éventuellement glisser les uns sur les autres, s'écarter les uns des autres. Le fil obtenu selon l'invention ne présente pas une intégrité au sens ordinaire du terme, c'est-à-dire qu'il n'est pas constitué de filaments fixés entre eux grâce à une liaison par collage provoqué par un ou plusieurs constituants filmogènes de l'ensimage.

Malgré cette présentation, le fil selon l'invention est facilement extrait de son enroulement sans avoir recours à un traitement préalable susceptible d'assurer la polymérisation de l'ensimage, comme c'est le cas d'un fil revêtu d'un ensimage dont la teneur en agents filmogènes est relativement élevée. Cette absence d'intégrité du fil, au sens classique du terme, est importante dans la mesure où elle favorisera son imprégnation par la matière organique à laquelle il sera ultérieurement associé.

Selon le rôle qui sera joué par le fil dans le processus de polymérisation de la matière organique, celui-ci sera revêtu d'un ensimage qui comprendra ou non un ou plusieurs amorceurs et/ou catalyseurs de polymérisation par traitement thermique.

Ainsi, selon l'invention, il est possible de réaliser un matériau composite en associant un fil revêtu d'un ensimage dénué d'amorceur et/ou de catalyseur de polymérisation et une matière organique comprenant au moins un amorceur et/ou un catalyseur de polymérisation et/ou un agent de copolymérisation.

Il est également possible d'associer une matière organique et un fil revêtu d'un ensimage, la première comprenant au moins un amorceur et/ou catalyseur de polymérisation et/ou un agent de copolymérisation, le second comprenant au moins un amorceur et/ou un catalyseur de polymérisation.

Dans ce cas l'ensimage est parfois susceptible d'évoluer dans le temps. Afin d'éviter ce phénomène, il est alors préférable d'utiliser un fil dont l'ensimage comprend également un agent stabilisant.

L'invention sera mieux comprise et ses avantages mieux appréciés grâce aux exemples suivants. Les fils de verre décrits ci-après sont formés par étirage mécanique de filets de verre fondu s'écoulant des orifices d'une filière selon une méthode bien connue de l'homme de l'art. Le verre utilisé est un alumino-boro-silicate pratiquement dénué d'oxydes alcalins connu sous le nom de verre E.

Les filaments obtenus, de 14 micromètres de diamètre, sont revêtus d'un ensimage conforme à l'invention par l'intermédiaire d'un rouleau ensimeur de 40 millimètres de diamètre tournant à 110 tours par minute.

### EXEMPLE 1

Dans cet exemple, l'ensimage déposé sur les filaments présente la composition pondérale suivante :

### Composants de masse moléculaire inférieure à 750 (monomères):

- 2 (2-éthoxy éthoxy) éthylacrylate commercialisé sous la référence « SR 256 »
   par la Société CRAY VALLEY 22%
- triéthylène glycol divinyl éther
   commercialisé sous la référence « DVE 3 »
   par la Société INTERNATIONAL SPECIALITY PRODUCTS 24 %
- triméthylolpropane triacrylate éthoxylé
   commercialisé sous la référence « SR 454 »
   par la Société CRAY VALLEY 20 %

### Composant de masse moléculaire supérieure à 750 :

- résine acrylate sur base époxy aromatique
   produit commercialisé sous la référence
   « PHOTOMER 3016 » par la Société AKCROS 20%

### Agent de pontage :

- aminopropyltriéthoxysilane
   produit commercialisé sous la référence « A 1100 »
   par la Société OSI SPECIALITIES S.A. 10 %

### Agent lubrifiant :

- palmitate d'isopropyle 4 %

Cet ensimage a été déposé à une viscosité d'environ 40 cP à la température moyenne de 37°C.

### EXEMPLE 2

Si l'ensimage déposé sur les filaments dans le cadre de cet exemple comprend les mêmes constituants que l'ensimage de l'exemple précédent, mais parfois dans des proportions un peu différentes, il comprend en outre un amorceur de polymérisation thermique. Sa composition pondérale est la suivante :

### Monomères :

- « SR 256 » 21%
- «DVE3» 23%
- « SR 454 » 20%

### Polymère :

- «PHOTOMER 3016» 20 %

### Agent de pontage :

- silane « A 1100 » 10%

### Agent lubrifiant :

- palmitate d'isopropyle 4%

### Amorceur :

- péroxybenzoate de terbutyle
   produit commercialisé sous la référence
   « TRIGONOX C » par la Société AKZO 2 %

Cet ensimage a été déposée à une viscosité d'environ 50 cP, à une température de l'ordre de 25°C.

Dans le cadre des essais correspondants aux exemples précédents, des enroulements presque identiques ont été obtenus à l'issue d'un temps de bobinage de 20 minutes.

Les fils peuvent être facilement extraits des différents enroulements réalisés. Les fils extraits d'un enroulement réalisé dans le cadre de l'exemple 1, présentent un titre moyen de 321 tex, leur perte au feu s'élevant à 0,80 %. Les fils extraits d'un enroulement réalisé dans le cadre de l'exemple 2, présentent un titre moyen de 330 tex, leur perte au feu s'élevant à 0,75 %.

Afin de montrer l'intérêt de renforcer des matières organiques selon l'invention, les enroulements de fils revêtus d'un ensimage correspondant à l'exemple 2 sont traités thermiquement, traitement au cours duquel ils ont été soumis à une température de 130°C pendant environ 180 minutes. La polymérisation de l'ensimage ainsi réalisée confère à ces fils une intégrité que ne présentent pas les fils revêtus de l'ensimage de l'exemple 1. Les compositions d'ensimage des deux exemples étant très voisines, la différence essentielle entre les deux types de fils avant leur association avec une matière organique réside dans l'intégrité des uns et l'absence d'intégrité des autres.

A partir de ces fils, des plaques à fils parallèles ont été réalisées conformément à la norme NF 57152. La résine utilisée est la résine époxy CY205 commercialisée sous cette référence par la Société CIBA GEIGY, à laquelle on ajoute 21,5% en poids d'un durcisseur aminé servant d'agent de copolymérisation, également commercialisée par la Société CIBA GEIGY sous la référence HT 972.

Les propriétés mécaniques présentées par ces plaques, en flexion et en cisaillement, ont été mesurées respectivement selon les normes ISO 178 et ISO 4585; ces propriétés ont été mesurées avant vieillissement et après immersion de ces plaques dans l'eau à 98°C pendant 72 heures. Ces propriétés, sont comparées ci-après à celles présentées par des plaques à fils parallèles réalisées avec un fil revêtu d'un ensimage aqueux comprenant une émulsion de résine époxy, des silanes et des tensio-actifs cationiques, et séché dans des conditions ordinaires.

Les résultats obtenus, sur 8 à 10 éprouvettes pour chaque type de fil, rapportés à des plaques présentant des taux de verre en poids identiques, sont les suivants :

| | **Ex. 1** | **Ex. 2** | **Référence** |
|---|---|---|---|
| **Contrainte à rupture en flexion (MPa)** | | | |
| Avant vieillissement | 2488 | 2376 | 2280 |
| *Ecart-type* σ (MPa) | 47 | 75 | 40 |
| Après vieillissement | 1637 | 1563 | 1400 |
| *Ecart-type* σ (MPa) | 27 | 73 | 20 |
| **Contrainte à rupture en cisaillement (MPa)** | | | |
| Avant vieillissement | 74,5 | 64,0 | 69,5 |
| *Ecart-type* σ (MPa) | 1,0 | 1,4 | 1,0 |
| Après vieillissement | 50,4 | 32,2 | 40,0 |
| *Ecart-type* σ (MPa) | 1,1 | 1,0 | 0,4 |

Ces résultats montrent que des pièces composites réalisées selon l'invention présentent des propriétés supérieures à celles des pièces réalisées à partir d'un fil revêtu d'un ensimage presque identique, mais polymérisé ; ces propriétés se distinguent de manière remarquable de celles des pièces composites réalisées à partir d'un fil de type connu.

Dans les exemples précédents, le matériau composite a été obtenu en réalisant la polymérisation de la matière organique au moyen d'un traitement thermique (voir norme NF 57152).

La fabrication selon l'invention d'un matériau composite peut être aussi réalisée en soumettant la matière organique et le fil revêtu de l'ensimage non polymérisé à l'action d'un rayonnement actinique. Par rayonnement actinique, il faut entendre les radiations susceptibles de pénétrer au sein de la matière telles que les rayonnements γ ou X ou un faisceau d'électrons.

## Revendications

1. Procédé de fabrication d'un matériau composite formé par l'association de fils de verre et d'une matière organique qui consiste à utiliser des fils de verre revêtus d'un ensimage constitué d'une solution dont la teneur en solvant est inférieure à 5% en poids, ladite solution comprenant un mélange de composants polymérisables et/ou réticulables par traitement thermique, lesdits composants étant pour au moins 60% en poids d'entre eux des composants dont la masse moléculaire est inférieure à 750, moins de 10% en poids d'agents filmogènes et de 0 à 25% en poids d'agents de pontage, d'agents lubrifiants, d'agents stabilisants, d'amorceurs et/ou de catalyseurs de polymérisation par traitement thermique, lesdits agents et amorceurs étant éventuellement polymérisables et/ou réticulables par traitement thermique, à associer la matière organique et lesdits fils de verre revêtus dudit ensimage non polymérisé, puis à soumettre l'ensemble à un traitement thermique et/ou l'action d'un rayonnement actinique.

2. Procédé selon la revendication 1, **caractérisé en ce que** les fils de verre associés à la matière organique sont revêtus d'un ensimage constitué d'une solution comprenant un mélange de composants polymérisables et/ou réticulables formé, pour au moins 60% en poids d'entre eux, de composants dont la masse moléculaire est inférieure à 500.

3. Procédé selon l'une des revendications 1 et 2, **caractérisé en ce que** les fils de verre associés à la matière organique sont revêtus d'un ensimage constitué d'une solution comprenant un mélange de composants polymérisables et/ou réticulables formé, pour au moins 60% en poids d'entré eux, de monomères.

4. Procédé selon l'une des revendications précédentes, **caractérisé en ce que** les fils de verre associés à la matière organique sont revêtus d'un ensimage constitué d'une solution qui comprend au moins 70% de composés polymérisables et/ou réticulables.

5. Procédé selon la revendication 4, **caractérisé en ce que** les fils de verre associés à la matière organique sont revêtus d'un ensimage constitué d'une solution qui comprend entre 75 et 100% de composés polymerisables et/ou réticulables.

6. Procédé selon l'une des revendications précédentes, **caractérisé en ce que** les fils de verre associés à la matière organique sont revêtus d'un ensimage constitué d'une solution dénuée de solvant.

7. Procédé selon l'une des revendications précédentes, **caractérisé en ce que** les fils associés à la matière organique sont revêtus d'un ensimage constitué d'une solution qui peut comprendre jusqu'à 5% en poids d'agents filmogènes choisis parmi les dérivés des silicones ou les siloxanes.

8. Procédé selon l'une quelconque des revendications précédentes, **caractérisé en ce que** les fils associés à la matière organique sont revêtus d'un ensimage constitué d'une solution qui peut comprendre jusqu'à 15% en poids d'agents de pontage sous la forme d'organo-silanes.

9. Procédé selon l'une quelconque des revendications précédentes, **caractérisé en ce que** les fils associés à la matière organique sont revêtus d'un ensimage constitué d'une solution qui peut comprendre jusqu'à 8% en poids d'agents lubrifiants tels que des esters gras ou des esters de glycol.

10. Procédé selon l'une quelconque des revendications précédentes, **caractérisé en ce que** les fils associés à la matière organique sont revêtus d'un ensimage constitué d'une solution qui, *en l'absence d'agents stabilisants,* peut comprendre jusqu'à 4% en poids d'amorceurs de polymérisation.

11. Procédé selon l'une quelconque des revendications précédentes, **caractérisé en ce que** les fils associés à la matière organique sont revêtus d'un ensimage constitué d'une solution qui peut comprendre jusqu'à 3% en poids d'agents stabilisants.

12. Procédé selon la revendication 1, **caractérisé en ce qu**'on associe une matière organique comprenant au moins un amorceur et/ou un catalyseur de polymérisation et/ou agent de copolymérisation et des fils de verre revêtus d'un ensimage constitué d'une solution dénuée d'amorceur et/ou de catalyseur de polymérisation.

13. Procédé selon la revendication 1, **caractérisé en ce qu**'on associe une matière organique comprenant au moins un amorceur et/ou catalyseur de polymérisation et/ou un agent de copolymérisation et des fils de verre revêtus d'un ensimage constitué d'une solution comprenant au moins un amorceur et/ou catalyseur de polymérisation.

14. Procédé selon la revendication 13, **caractérisé en ce que** l'ensimage constitué d'une solution déposée sur les fils de verre comprend un agent stabilisant.

## Patentansprüche

1. Verfahren zur Herstellung eines Verbundmaterials, das durch die Verbindung von Glasfäden mit einem organischen Material gebildet ist, welches darin besteht, Glasfäden zu verwenden, die mit einer Schlichte überzogen sind, die aus einer Lösung besteht, deren Lösungsmittelgehalt weniger als 5 Gew.-% beträgt und welche ein Gemisch aus Bestandteilen umfasst, die durch eine Wärmebehandlung polymerisierbar und/oder vernetzbar sind, wobei mindestens 60 Gew.-% davon Bestandteile, deren Molmasse unter 750 liegt, weniger als 10 Gew.-% filmbildende Mittel und 0 bis 25 Gew.-% Haftmittel, Gleitmittel, Stabilisatoren und Starter und/oder Katalysatoren einer Polymerisation durch Wärmebehandlung sind und diese Mittel und Starter gegebenenfalls durch Wärmebehandlung polymerisierbar und/oder vernetzbar sind, das organische Material mit den mit der nicht polymerisierten Schlichte überzogenen Glasfäden zu verbinden und anschließend das Ganze einer Wärmebehandlung und/oder der Einwirkung einer aktinischen Strahlung zu unterwerfen.

2. Verfahren nach Anspruch 1, **dadurch gekennzeichnet, dass** die mit dem organischen Material verbundenen Glasfäden mit einer Schlichte überzogen sind, welche aus einer Lösung besteht, die ein Gemisch aus polymerisierbaren und/oder vernetzbaren Bestandteilen umfasst, das zu mindestens 60 Gew.-% davon aus Bestandteilen gebildet ist, deren Molmasse unter 500 liegt.

3. Verfahren nach Anspruch 1 oder 2, **dadurch gekennzeichnet, dass** die mit dem organischen Material verbundenen Glasfäden mit einer Schlichte überzogen sind, welche aus einer Lösung besteht, die ein Gemisch aus polymerisierbaren und/oder vernetzbaren Bestandteilen umfasst, das zu mindestens 60 Gew.-% davon aus Monomeren gebildet ist.

4. Verfahren nach einem der vorhergehenden Ansprüche, **dadurch gekennzeichnet, dass** die mit dem organischen Material verbundenen Glasfäden mit einer Schlichte überzogen sind, welche aus einer Lösung besteht, die mindestens 70 Gew.-% polymerisierbare und/oder vernetzbare Bestandteile umfasst.

5. Verfahren nach Anspruch 4, **dadurch gekennzeichnet, dass** die mit dem organischen Material verbundenen Glasfäden mit einer Schlichte überzogen sind, welche aus einer Lösung besteht, die 75 bis 100 % polymerisierbare und/oder vernetzbare Bestandteile umfasst.

6. Verfahren nach einem der vorhergehenden Ansprüche, **dadurch gekennzeichnet, dass** die mit dem organischen Material verbundenen Glasfäden mit einer Schlichte überzogen sind, welche aus einer lösungsmittelfreien Lösung besteht.

7. Verfahren nach einem der vorhergehenden Ansprüche, **dadurch gekennzeichnet, dass** die mit dem organischen Material verbundenen Glasfäden mit einer Schlichte überzogen sind, welche aus einer Lösung besteht, die bis zu 5 Gew.-% filmbildende Mittel enthalten kann, die aus den Siliconderivaten oder den Siloxanen ausgewählt sind.

8. Verfahren nach einem der vorhergehenden Ansprüche, **dadurch gekennzeichnet, dass** die mit dem organischen Material verbundenen Glasfäden mit einer Schlichte überzogen sind, welche aus einer Lösung besteht, die bis zu 15 Gew.-% Haftmittel in Form von Organosilanen enthalten kann.

9. Verfahren nach einem der vorhergehenden Ansprüche, **dadurch gekennzeichnet, dass** die mit dem organischen Material verbundenen Glasfäden mit einer Schlichte überzogen sind, welche aus einer Lösung besteht, die bis zu 8 Gew.-% Gleitmittel wie Fettsäureester oder Glykolester enthalten kann.

10. Verfahren nach einem der vorhergehenden Ansprüche, **dadurch gekennzeichnet, dass** die mit dem organischen Material verbundenen Glasfäden mit einer Schlichte überzogen sind, welche aus einer Lösung besteht, die bei Abwesenheit von Stabilisatoren bis zu 4 Gew.-% Polymerisationsstarter enthalten kann.

11. Verfahren nach einem der vorhergehenden Ansprüche, **dadurch gekennzeichnet, dass** die mit dem organischen Material verbundenen Glasfäden mit einer Schlichte überzogen sind, welche aus einer Lösung besteht, die bis zu 3 Gew.-% Stabilisatoren enthalten kann.

12. Verfahren nach Anspruch 1, **dadurch gekennzeichnet, dass** ein organisches Material, das mindestens einen Polymerisationsstarter und/oder -katalysator und/oder ein Copolymerisationsmittel enthält, mit Glasfäden verbunden wird, welche mit einer Schlichte überzogen sind, die aus einer Lösung besteht, die frei von Polymerisationsstartern und/oder -katalysatoren ist.

13. Verfahren nach Anspruch 1, **dadurch gekennzeichnet, dass** ein organisches Material, das mindestens einen Polymerisationsstarter und/oder -katalysator und/oder ein Copolymerisationsmittel enthält, mit Glasfäden verbunden wird, welche mit einer Schlichte überzogen sind, die aus einer Lösung besteht, die mindestens einen Polymerisationsstarter und/oder -katalysator umfasst.

14. Verfahren nach Anspruch 13, **dadurch gekennzeichnet, dass** die Schlichte, die aus einer auf den Glasfäden aufgebrachten Lösung besteht, einen Stabilisator enthält.

## Claims

1. Method of manufacturing a composite material formed by the combination of glass strands and of an organic substance, consisting of the use of glass strands coated with a sizing composition constituted by a solution the solvent content of which is less than 5% by weight, the said solution comprising a mixture of components which can be polymerized and/or cross-linked by heat treatment, amongst the said components, at least 60% by weight being components the molecular weights of which are less than 750, less than 10% by weight being film-forming agents, and from 0 to 25% by weight being bridging agents, lubricating agents, stabilizing agents, and initiators and/or catalysts of polymerization by heat treatment, the said agents and initiators optionally being capable of being polymerized and/or cross-linked by heat treatment, of the combination of the organic substance and the said glass strands, coated with the said non-polymerized sizing composition, and of the subsequent subjection of the assembly to heat treatment and/or to the action of actinic radiation.

2. Method according to Claim 1, **characterized in that** the glass strands combined with the organic substance are coated with a sizing composition constituted by a solution comprising a mixture of components which can be polymerized and/or cross-linked, at least 60% by weight of the mixture being constituted by components the molecular weights of which are less than 500.

3. Method according to any one of Claims 1 and 2, **characterized in that** the glass strands combined with the organic substance are coated with a sizing composition constituted by a solution comprising a mixture of components which can be polymerized and/or cross linked, at least 60% by weight of the mixture being constituted by monomers.

4. Method according to any one of the preceding claims, **characterized in that** the glass strands combined with the organic substance are coated with a sizing composition constituted by a solution which comprises at least 70% of compounds which can be polymerised and/or cross linked.

5. Method according to Claim 4, **characterized in that** the glass strands combined with the organic substance are coated with a sizing composition constituted by a solution which comprises between 75 and 100% of compounds which can be polymerized and/or cross linked.

6. Method according to any one of the preceding claims, **characterized in that** the glass strands combined with the organic substance are coated with a sizing composition constituted by a solution without solvent.

7. Method according to any one of the preceding claims, **characterized in that** the strands combined with the organic substance are coated with a sizing composition constituted by a solution which may comprise up to 5% by weight of film-forming agents selected from derivatives of silicones and/or siloxanes.

8. Method according to any one of the preceding claims, **characterized in that** the strands combined with the organic substance are coated with a sizing composition constituted by a solution which may comprise up to 15% by weight of bridging agents in the form of organo-silanes.

9. Method according to any one of the preceding claims, **characterized in that** the strands combined with the organic substance are coated with a sizing composition constituted by a solution which may comprise up to 8% by weight of lubricating agents such as fatty esters or glycol esters.

10. Method according to any one of the preceding claims, **characterized in that** the strands combined with the organic substance are coated with a sizing composition constituted by a solution which, in the absence of stabilizing agents, may comprise up to 4% by weight of polymerization initiators.

11. Method according to any one of the preceding claims, **characterized in that** the strands combined with the organic substance are coated with a sizing composition constituted by a solution which may comprise up to 3% by weight of stabilizing agents.

12. Method according to Claim 1, **characterized in that** an organic substance comprising at least one polymerization initiator and/or catalyst and/or copolymerization agent, and glass strands coated with a sizing composition constituted by a solution free of polymerization initiator and/or catalyst are combined.

13. Method according to Claim 1, **characterized in that** an organic substance comprising at least one polymerization initiator and/or catalyst and/or copolymerization agent, and glass strands coated with a sizing composition constituted by a solution comprising at least one polymerization initiator and/or catalyst are combined.

14. Method according to Claim 13, **characterized in that** the sizing composition constituted by a solution which is deposited on the glass strands comprises a stabilizing agent.
